# DEMANDE DE BREVET EUROPEEN

(11) **EP 3 936 254 A1**
(43) Date de publication de la demande: **12.01.2022**
(21) Numéro de dépôt: 21184150.7
(22) Date de dépôt: 07.07.2021
(51) Int. Cl.: B22D 19/00, F02F 3/04, F16J 1/00, F16J 9/22, F16J 9/26

(54) **PORTE-SEGMENT POUR PISTON**

(30) Priorité: 10.07.2020 FR 2007371
(71) Demandeur: RENAULT s.a.s., 92100 Boulogne-Billancourt (FR)
(72) Inventeur: BERGER, Jérémy, 91120 PALAISEAU (FR); LE NAOUR, Steven, 92400 Courbevoie (FR); SAUVAGE, Olivier, 92600 Asnières sur seine (FR)

(57) **Abrégé**

L'invention porte sur un porte-segment (20) pour piston, le porte-segment (20) ayant un axe principal (A) et étant destiné à participer au maintien en position d'un segment par rapport à un piston de moteur à combustion interne, notamment un segment de feu (30), le porte-segment (20) ayant une section (S) suivant un plan (P) comprenant l'axe principal (A) en forme de L ou sensiblement en forme de L.

## Description

### Domaine technique de l'invention

L'invention concerne un porte-segment pour piston de moteur à combustion interne. L'invention porte encore sur un piston comprenant un tel porte-segment. L'invention porte encore sur un agencement comprenant un tel piston et/ou un tel porte-segment. L'invention porte encore sur un moteur à combustion interne comprenant un tel agencement et/ou un tel piston et/ou un tel porte-segment. L'invention porte encore sur véhicule comprenant un tel moteur et/ou un tel agencement et/ou un tel piston et/ou un tel porte-segment. L'invention porte encore sur un procédé de fabrication d'un tel piston.

### Etat de la technique antérieure

Le pré-allumage à basse vitesse d'un moteur à combustion interne, connu sous l'acronyme anglo-saxon LSPI (pour Low-Speed Pre-Ignition), requiert l'implantation sur un piston d'un porte-segment, ou support de segment, en particulier pour le segment le plus proche de la chambre de combustion, aussi appelé segment de feu. Ainsi, un porte-segment, généralement fabriqué dans une matière plus dure que le corps du piston, est généralement implanté en haut du piston.

Cependant, lors de la phase d'injection, une partie du carburant va se déposer sur les différentes surfaces du piston, du segment coup de feu et du fût. Cette partie du carburant ne brûle pas et peut s'évaporer lors de la phase d'échappement. Des hydrocarbures imbrûlés, aussi appelés HC, peuvent donc se retrouver directement à l'échappement. La quantité de HC rejetée est sous contrainte dans les normes de dépollution.

Pour réduire les émissions à la source des hydrocarbures imbrûlés, il convient donc de limiter la hauteur du premier cordon d'un piston, autrement dit de réduire la distance entre la gorge du segment de feu et le haut du piston.

Plus on réduit les surfaces disponibles pour le dépôt de carburant pendant l'injection, plus on limite la quantité qui pourra être rejetée. C'est pourquoi on cherche à limiter autant que possible la hauteur du premier cordon du piston. Or, l'implantation d'un porte-segment nécessite une hauteur de premier cordon conséquente.

Il en résulte qu'un porte-segment au niveau du segment de feu n'est pas compatible avec les normes de dépollution.

### Présentation de l'invention

Le but de l'invention est de fournir un porte-segment remédiant aux inconvénients ci-dessus. En particulier, l'invention propose un procédé de fabrication d'un piston simple, fiable et économique.

### Résumé de l'invention

Pour atteindre cet objectif, l'invention porte sur un porte-segment pour piston, le porte-segment ayant un axe principal et étant destiné à participer au maintien en position d'un segment par rapport à un piston de moteur à combustion interne, notamment un segment de feu, le porte-segment ayant une section suivant un plan comprenant l'axe principal en forme de L ou sensiblement en forme de L.

La section peut comprendre :
- une première aile s'étendant radialement ou sensiblement radialement, la première aile pouvant avoir une base agencée du côté de l'axe principal,
- une deuxième aile s'étendant perpendiculairement ou sensiblement perpendiculairement par rapport à la première aile depuis la base de la première aile.

L'invention porte encore sur un piston pour moteur à combustion interne comprenant au moins un porte-segment tel que défini précédemment, notamment un porte-segment destiné à participer au maintien en position d'un segment de feu.

L'invention porte encore sur un piston pour moteur à combustion interne comprenant au moins un porte-segment tel que défini précédemment, notamment un porte-segment destiné à participer au maintien en position d'un segment de feu, la deuxième aile s'étendant depuis la base vers le haut du piston.

Le piston peut comprendre un corps comprenant une gorge destinée à recevoir au moins partiellement un segment, notamment un segment de feu, la gorge étant ménagée dans le corps et dans le porte-segment.

L'invention porte encore sur un agencement comprenant un piston tel que défini précédemment, l'agencement comprenant un segment, notamment un segment de feu.

L'épaisseur du segment, mesurée suivant la direction de l'axe principal, peut être supérieure à l'épaisseur d'une partie de réception radiale du segment en vis-à-vis de la deuxième aile, mesurée suivant la direction de l'axe principal, notamment l'épaisseur du segment peut être le double ou sensiblement le double de l'épaisseur de la partie de réception radiale.

L'invention porte encore sur un moteur à combustion interne comprenant au moins un porte-segment tel que défini précédemment, et/ou un piston tel que défini précédemment, et/ou un agencement tel que défini précédemment.

L'invention porte encore sur un véhicule comprenant un moteur à combustion interne tel que défini précédemment, et/ou un agencement tel que défini précédemment, et/ou un piston tel que défini précédemment, et/ou un porte-segment tel que défini précédemment.

L'invention porte encore sur un procédé de fabrication d'un piston pour moteur à combustion interne tel que défini précédemment, comprenant :
- une étape de positionnement d'un insert, notamment un insert en acier ou en fonte, au sein d'un moule,
- suivie d'une étape de fonderie comprenant une coulée d'un élément, notamment un élément en alliage d'aluminium, comprenant un surmoulage de l'élément autour de l'insert,
- suivie d'une étape d'usinage, notamment de tournage, de l'élément et de l'insert de sorte à obtenir un piston comprenant une gorge et un porte-segment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue schématique d'un moteur selon un mode de réalisation.
[Fig. 3] La figure 3 est une section partielle d'un piston selon un mode de réalisation.
[Fig. 4] La figure 4 est une vue en coupe d'un détail du piston selon le mode de réalisation.

### Description détaillée

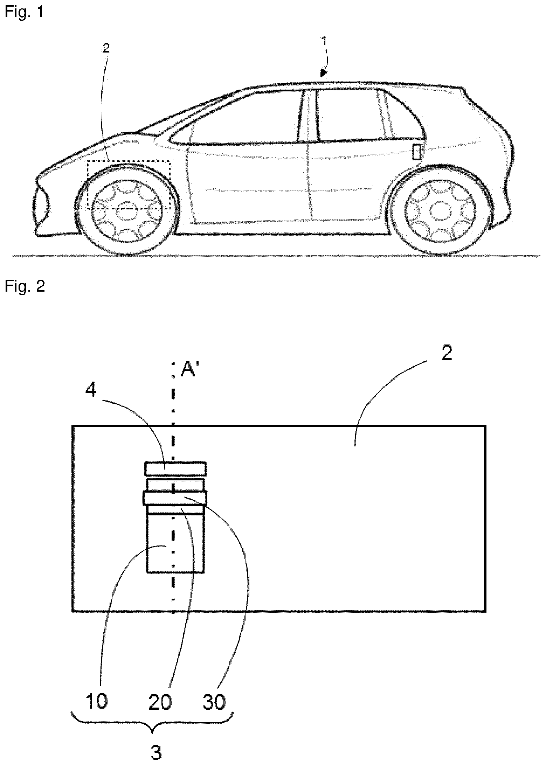

La figure 1 illustre schématiquement un véhicule, en particulier un véhicule automobile 1. Le véhicule comprend au moins un moteur à combustion interne 2, aussi appelé moteur thermique. Par exemple, le groupe moto propulseur est hybride et comprend aussi un moteur électrique. Le moteur à combustion interne 2 est par exemple à allumage commandé ou à cycle Diesel.

Comme illustré sur la figure 2, le moteur 2 comprend au moins un agencement 3. Plus précisément, l'agencement 3 comprend un piston 10 qui sera précisé plus loin. Le piston 10 se translate dans un cylindre (non illustré) selon un axe A'. L'agencement 3 comprend encore un segment. Avantageusement, le segment est un segment de feu 30. Par « segment de feu », on entend le segment agencé le plus en haut du piston, autrement dit le plus proche d'une chambre de combustion 4. L'agencement 3 comprend encore un porte-segment 20. Plus précisément, le piston 10 comprend le porte-segment 20. Par exemple le porte-segment 20 est en fonte.

De manière générale, par « haut », on entend au niveau du haut ou vers le haut du piston, du côté de la chambre de combustion. Par « bas », on entend au niveau du bas ou vers le bas du piston, du côté de la jupe du piston.

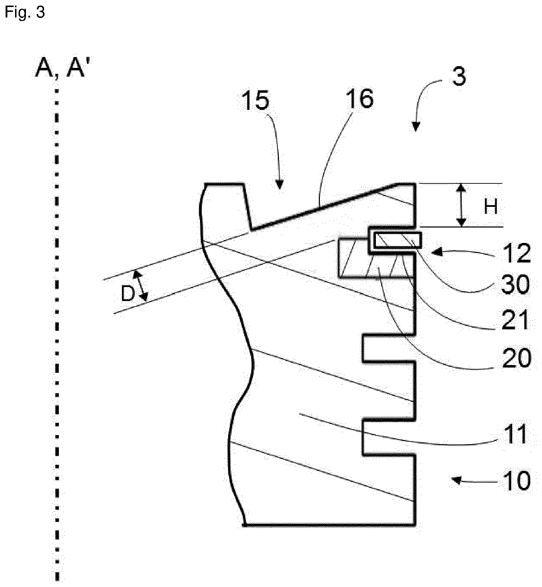

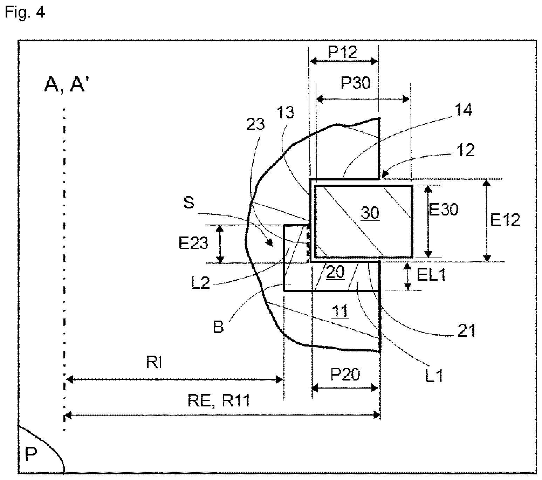

Selon le mode de réalisation illustré sur les figures 3 et 4, le piston 10 comprend un corps 11. Le corps 11 comprend une gorge 12. La gorge 12 est destinée à recevoir au moins partiellement un segment. De préférence, la gorge 12 est ménagée dans le corps 11 et dans le porte-segment 20 comme il sera explicité par la suite.

Le porte-segment 20 a un axe principal A. Avantageusement, l'axe principal A est confondu ou sensiblement confondu avec l'axe A' de translation du piston 10. Plus précisément, comme illustré en particulier sur la figure 4, le porte-segment 20 présente une forme annulaire avec une section S en forme de L, ou sensiblement en forme de L, suivant un plan P comprenant l'axe principal A.

Selon le mode de réalisation illustré, la section S comprend une première aile L1. La première aile L1 s'étend radialement, ou sensiblement radialement, par rapport à l'axe principal A du porte-segment 20. La première aile L1 a une base B agencée du côté de l'axe principal A. Autrement dit, la base B est au niveau, ou sensiblement au niveau, d'un rayon intérieur RI du porte segment 20. La section S comprend encore une deuxième aile L2. La deuxième aile L2 s'étend perpendiculairement, ou sensiblement perpendiculairement, par rapport à la première aile L1 depuis la base B de la première aile L1. Autrement dit la deuxième aile L2 s'étend axialement, parallèlement, ou sensiblement parallèlement, à l'axe principal A du porte-segment 20.

Avantageusement, la deuxième aile L2 s'étend depuis la base B vers le haut du piston 10, autrement dit vers la chambre de combustion.

Plus précisément, comme illustré sur la figure 4, le segment a une épaisseur E30 mesurée suivant la direction de l'axe principal A. Le porte-segment 20 comprend une partie de réception radiale 23 du segment en vis-à-vis de la deuxième aile L2. La partie de réception radiale 23, de préférence cylindrique et d'axe A, a une épaisseur E23 mesurée suivant la direction de l'axe principal A. De préférence, l'épaisseur E30 du segment est supérieure à l'épaisseur E23 de la partie de réception radiale 23. Avantageusement, l'épaisseur E30 du segment est le double, ou sensiblement le double, de l'épaisseur E23 de la partie de réception radiale 23.

La gorge 12 a une épaisseur E12 mesurée suivant la direction de l'axe principal A. L'épaisseur E12 est égale à l'épaisseur E30 du segment à laquelle on a ajouté un jeu de fonctionnement entre la gorge 12 et le segment. En effet, le jeu de fonctionnement permet notamment au segment de s'étendre radialement (et/ou de se resserrer radialement) au sein de la gorge 12 pour assurer son rôle de joint contre la paroi interne du cylindre et éviter que les gaz présents dans la chambre de combustion ne s'échappent, notamment vers le bas moteur.

La gorge 12 a une profondeur P12 mesurée radialement par rapport à l'axe principal A au sein du corps 11 du piston, au-dessus du porte-segment 20. Le porte segment 20 a une profondeur P20 mesurée radialement par rapport à l'axe principal A entre la partie de réception radiale 23 et le rayon extérieur RE du porte-segment 20.

De préférence, la profondeur P12 et la profondeur P20 sont égales, ou sensiblement égales, de sorte que le rayon extérieur RE du porte-segment soit confondu, ou sensiblement confondu, avec un rayon R11 du corps 11 du piston au-dessus, ou sensiblement au-dessus, du porte-segment 20. Ainsi, de préférence, la partie de réception radiale 23 est alignée, ou sensiblement alignée, avec une surface cylindrique 13 s'étendant au fond de la gorge 12 dans le corps 11.

De préférence l'épaisseur du segment selon la direction radiale par rapport à l'axe principal A ou l'axe du piston A', ou profondeur, P30, est supérieure à la profondeur P12. La profondeur P30 est également supérieure à la profondeur P20.

Par exemple, l'épaisseur EL1 de la première aile L1 mesurée suivant la direction de l'axe principal A est égale, ou sensiblement égale, à l'épaisseur E23 de la partie de réception radiale 23. Autrement dit, l'épaisseur totale du porte-segment 20 mesurée suivant la direction de l'axe principal A vaut, ou vaut sensiblement, deux fois l'épaisseur E23 ou deux fois l'épaisseur EL1.

Alternativement, l'épaisseur E23 est supérieure à l'épaisseur EL1 comme représenté sur la figure 4. Alternativement encore, l'épaisseur E23 est inférieure à l'épaisseur EL1.

Un mode d'exécution d'un procédé de fabrication du piston 10 va maintenant être décrit.

Le procédé de fabrication comprend une étape de positionnement d'un insert au sein d'un moule. Par exemple, l'insert est en acier ou en fonte.

On procède ensuite à une étape de fonderie comprenant une coulée d'un élément comprenant un surmoulage de l'élément autour de l'insert. Par exemple, l'élément est en alliage d'aluminium.

On procède ensuite à une étape d'usinage de l'élément et de l'insert de sorte à obtenir le piston 10 comprenant la gorge 12 et le porte-segment 20. De préférence, cette étape d'usinage comprend du tournage. On réalise ainsi le cylindre de rayon R11 du corps 11 et/ou le cylindre de rayon extérieur RE du porte-segment 20 et/ou la partie de réception radiale 23 du porte-segment et/ou une face 21 orientée vers le haut du porte-segment et/ou une face 14 orientée vers le bas de la gorge 12 et/ou la surface cylindrique 13 du fonds de la gorge 12 dans le corps 11.

Avantageusement, la face 14, la surface cylindrique 13, la partie de réception radiale 23, et la face 21 sont obtenus lors de cette étape d'usinage de sorte à créer la gorge 12 au cours de cette étape.

En résumé, étant donnée la section S en forme de L du porte-segment 20 de type anneau, de préférence cylindrique, le porte-segment assure un maintien partiel du segment 30 dans la gorge du piston 10. En effet, des contacts entre le segment 30 et le porte-segment 20 ne peuvent se faire qu'au niveau de la partie cylindrique de réception 23 et de la face 21 du porte-segment. Ainsi la solution permet de renforcer le flanc inférieur du segment qui est généralement le plus sollicité.

Le complément du maintien du segment est assuré par la partie de la gorge 12 ménagée directement dans le corps 11 du piston, via des contacts entre le segment et la surface cylindrique 13 et/ou la face 14.

On peut ainsi agencer/ramener plus haut le segment tout en assurant une épaisseur minimale de matière du piston depuis la face supérieure du piston, selon l'axe A vers la chambre de combustion. La gorge 12 d'accueil du segment est creusée en partie supérieure ou haute dans la paroi du piston et en partie inférieure dans le porte segment qui assure le renforcement de la paroi inférieure de la gorge.

Bien qu'un seul porte-segment ait été décrit sur le piston 10, de préférence agencé pour maintenir et/ou participer au maintien du segment de feu, davantage de porte-segments peuvent être prévus sur un même piston. Par exemple, il peut être prévu un porte-segment par segment du piston.

Grâce à la forme de la section S du porte-segment, la hauteur H illustrée sur la figure 3, entre le haut du piston et la gorge de réception du segment de feu (hauteur du premier cordon) peut être réduite. Une telle réduction permet de limiter les émissions d'hydrocarbures imbrûlés (HC) et par conséquent de satisfaire les normes de dépollution. En outre, le porte-segment 20 offre une épaisseur de matière suffisante entre le haut du piston et le porte-segment 20 ce qui est compatible avec la présence d'empreintes ou encoches ou embrèvements 15 ménagés au niveau des soupapes. En effet, comme illustré sur la figure 3, à l'issue de l'obtention des embrèvements 15, par exemple par usinage, l'épaisseur D de matière subsiste. L'épaisseur D est par exemple mesurée selon une direction perpendiculaire ou sensiblement perpendiculaire à une face 16 d'un embrèvement 15. En résumé, la solution permet de réduire la hauteur premier cordon H tout en maintenant une distance D conséquente entre l'embrèvement 15 et le porte-segment 20. Ainsi, on supprime une contrainte de conception en éliminant une proximité potentiellement gênante.

Ainsi, bien que le pré-allumage à basse vitesse d'un moteur à combustion interne (acronyme anglo-saxon LSPI pour Low-Speed Pre-Ignition) nécessite l'implantation d'un porte-segment, en particulier pour le segment de feu, la solution permet de limiter les émissions d'hydrocarbures imbrûlés.

Le porte-segment est en outre peu volumineux ce qui engendre une faible consommation de matière et par conséquent une économie par rapport à un porte-segment de l'état de la technique.

De plus, il en résulte un piston de hauteur totale moindre ce qui permet, à cylindrée égale, un gain sur la hauteur de la chemise et/ou du carter cylindre. Il est alors possible d'abaisser l'encombrement du moteur selon la direction de translation du ou des piston(s).

Par exemple, la distance D entre l'embrèvement 15 et le porte-segment 20 et/ou la ou les profondeur(s) P12, P20 et/ou le rayon intérieur RI du porte-segment et/ou la ou les épaisseurs E23, EL1, E12, est déterminée selon les contraintes dans le piston (en fonction de la pression régnant dans le cylindre et de la température), du taux de compression requis pour le moteur et de la loi de cames.

L'invention peut être appliquée à tous moteurs à combustion interne, en particulier à ceux comprenant des têtes de soupapes venant à proximité du dessus du piston.

En remarque, la solution selon l'invention atteint donc l'objectif recherché de permettre d'implanter un porte-segment sur un piston tout en limitant la hauteur du premier cordon de sorte à satisfaire les normes de dépollution et présente les avantages suivants :
- elle est économique ;
- elle est facile à mettre en œuvre.

## Revendications

1. Porte-segment (20) pour piston (10), le porte-segment (20) ayant un axe principal (A) et étant destiné à participer au maintien en position d'un segment par rapport à un piston (10) de moteur à combustion interne (2), notamment un segment de feu (30), **caractérisé en ce que** le porte-segment (20) a une section (S) suivant un plan (P) comprenant l'axe principal (A) en forme de L ou sensiblement en forme de L.

2. Porte-segment (20) selon la revendication précédente, caractérisé en que la section (S) comprend :
- une première aile (L1) s'étendant radialement ou sensiblement radialement, la première aile (L1) ayant une base (B) agencée du côté de l'axe principal (A),
- une deuxième aile (L2) s'étendant perpendiculairement ou sensiblement perpendiculairement par rapport à la première aile (L1) depuis la base (B) de la première aile (L1).

3. Piston (10) pour moteur à combustion interne (2), **caractérisé en ce qu'**il comprend au moins un porte-segment (20) selon l'une des revendications précédentes, notamment un porte-segment (20) destiné à participer au maintien en position d'un segment de feu (30).

4. Piston (10) pour moteur à combustion interne (2), **caractérisé en ce qu'**il comprend au moins un porte-segment (20) selon la revendication 2, notamment un porte-segment (20) destiné à participer au maintien en position d'un segment de feu (30), la deuxième aile (L2) s'étendant depuis la base (B) vers le haut du piston (10).

5. Piston (10) selon l'une des revendications 3 ou 4, **caractérisé en ce que** le piston (10) comprend un corps (11) comprenant une gorge (12) destinée à recevoir au moins partiellement un segment, notamment un segment de feu (30), la gorge (12) étant ménagée dans le corps (11) et dans le porte-segment (20).

6. Agencement (3) comprenant un piston (10) selon l'une des revendications 3 à 5, **caractérisé en ce que** l'agencement (3) comprend un segment, notamment un segment de feu (30).

7. Agencement (3) selon la revendication précédente, **caractérisé en ce que** l'épaisseur (E30) du segment, mesurée suivant la direction de l'axe principal (A), est supérieure à l'épaisseur (E23) d'une partie de réception radiale (23) du segment en vis-à-vis de la deuxième aile (L2), mesurée suivant la direction de l'axe principal (A), notamment l'épaisseur (E30) du segment est le double ou sensiblement le double de l'épaisseur (E23) de la partie de réception radiale (23).

8. Moteur à combustion interne (2), **caractérisé en ce qu'**il comprend au moins un porte-segment (20) selon l'une des revendications 1 ou 2, et/ou un piston (10) selon l'une des revendications 3 à 5, et/ou un agencement (3) selon l'une des revendications 6 ou 7.

9. Véhicule (1), **caractérisé en ce qu'**il comprend un moteur à combustion interne selon la revendication précédente, et/ou un agencement (3) selon l'une des revendications 6 ou 7, et/ou un piston (10) selon l'une des revendication 3 à 5, et/ou un porte-segment (20) selon l'une des revendications 1 ou 2.

10. Procédé de fabrication d'un piston (10) pour moteur à combustion interne (2) selon l'une des revendications 3 à 5, **caractérisé en ce qu'**il comprend :
- une étape de positionnement d'un insert, notamment un insert en acier ou en fonte, au sein d'un moule,
- suivie d'une étape de fonderie comprenant une coulée d'un élément, notamment un élément en alliage d'aluminium, comprenant un surmoulage de l'élément autour de l'insert,
- suivie d'une étape d'usinage, notamment de tournage, de l'élément et de l'insert de sorte à obtenir un piston (10) comprenant une gorge (12) et un porte-segment (20).
